# EUROPEAN PATENT APPLICATION

(11) **EP 1 128 295 A2**
(43) Date of publication of application: **29.08.2001**
(21) Application number: 00118902.6
(22) Date of filing: 31.08.2000
(51) Int. Cl.: G06F 17/60

(54) **Electronic commerce system for trading operation**

(30) Priority: 25.02.2000 JP 2000054367
(71) Applicant: Hitachi, Ltd., Chiyoda-ku, Tokyo 101-8010 (JP)
(72) Inventor: Oyama, Hiroaki, c/o Hitachi, Ltd., Tokyo 100-8220 (JP); Kitajima, Tetsuya, c/o Hitachi, Ltd., Tokyo 100-8220 (JP); Wakuta, Hideto, c/o Hitachi, Ltd., Tokyo 100-8220 (JP)
(74) Representative: Strehl Schübel-Hopf & Partner

(57) **Abstract**

In an electronic transaction carried out in a virtual commerce space closed on an internet, when persons concerned with the transaction belong to different countries, it has hitherto been practiced that the persons concerned with the transaction manually proceed with business processes inherent in trading such as acquisition of export application and customs procedures on paper base in addition to an electronic payment process carried out on the virtual space region. To eliminate the manual business processing, an electronic commerce system connected to the virtual commerce space constructed on the internet and having a trading function, includes server units in which tax, carriage and insurance premium incurred, when a trading transaction is carried out, are automatically calculated, added, as reference information, to estimation information and then registered. When an order/reception process is carried out between different countries during purchase order, workflows concerning trading business are automatically prepared and registered and trading document information necessary for service defined on the workflows is automatically prepared.

## Description

### BACKGROUND OF THE INVENTION

The present invention relates to a server for trading operation.

Conventionally, as described in JP-A-10-207956, an electronic payment system for constructing an electronic commerce transaction which maintains, in a virtual space region, security of order/order acceptance of goods at a remote location, payment for the order and actual delivery of the goods has been employed to certify the presence of the goods and the presence of payment sum, thereby making a rule for universality of safety of transaction between persons concerned with the commerce transaction. When, in the prior art, the persons concerned with transaction belong to different countries, they not only conduct the electronic payment process in the virtual space region but also must manually proceed with business processes inherent in trading such as acquirement of an export application and customs clearance procedures. In the event that the export application is rejected, the transaction becomes impossible. Inconveniently, however, the aforementioned prior art system cannot support the function to cope with such a situation and a user is necessarily forced to proceed with a work on non-electronic document base.

Besides, putting documents for the order/ reception process aside, at least 40 documents must be prepared in typical trading operation and the prepared documents must be circulated to about 30 dealers concerned, so that persons in charge are required to have expert skill that is higher than that in domestic transaction processing. Further, posting and circulation of documents carried out on paper base make it difficult to prevent artificial errors such as clerical errors, leading to a major cause of the occurrence of reworking. Furthermore, since a plurality of dealers are involved, progress conditions of documents are hardly grasped to give rise to a cause of prolongation of time required for establishment of the transaction. Additionally, in the case of international transaction, additional fees such as tax and insurance premium are incurred in many cases, thus raising a problem that even when an estimation answer is received from a counterpart firm, cost calculation cannot be done accurately unless persons in charge of order attend to service by being well aware of the overseas transaction practice.

### SUMMARY OF THE INVENTION

The present invention intends to permit the business process to be conducted similarly to domestic transactions without resort to consciousness of the business process inherent in trading when persons concerned with commerce proceed with services concerning order/reception over different countries. More specifically, in response to an oversea answer to inquiry, additional expenditure incurred in addition to answered estimation sum can be calculated automatically without asking an estimation receiver to proceed with a special process and results of the automatic calculation can be added and presented. It is also intended that during an overseas order process, documents necessary for a required trading operation process and clerical work of preparation of trading documents can be arranged automatically and electronic forwarding of the trading documents to dealers concerned can be effected automatically without resort to order sender and order receiver.

According to an aspect of the present invention, to accomplish the above object, an electronic commerce system connected to a virtual commerce space constructed on an internet and having a function of trading comprises subsystems participating in trading management related to a series of operations ranging over estimation answer and order processing in trading transactions, the subsystems including a subsystem having an estimation support function, a subsystem having a trading cost calculation function, a subsystem having an electronic purchase order support function, a subsystem having a workflow management function, a subsystem having a trading document preparation function, a subsystem having a user information management function, and a subsystem having a global information management function. During the preparation of an estimation answer, the estimation support subsystem determines whether an estimation answer firm and an estimation reception firm belong to the same country. If they belong to different countries, the trading cost calculation subsystem automatically calculates tax, carriage and insurance premium incurred in a trading transaction to provide the calculation results as reference information which in turn is added to estimation information and registered. During purchase order, the EDI (electronic Data Interchange) subsystem determines whether an order sending firm and an order receiving firm belong to the same country. If they belong to different countries, the workflow subsystem automatically prepares and registers workflow information concerning trading business in respect of the purchase order information and carries out status management of trading operations on the basis of the prepared workflow. The trading document preparation subsystem automatically prepares and registers trading document information necessary for operations defined on the workflow in respect of the purchase order information.

### BRIEF DESCRIPTION OF THE DRAWINGS

Fig. 1 is a diagram for explaining the function and construction of a central commerce server according to an embodiment of the invention.

Fig. 2 is a diagram for explaining the connection relation in the overall construction of an electronic commerce system according to the embodiment of the invention.

Fig. 3 is a flow chart showing a business process in the central commerce server according to the embodiment of the invention.

Fig. 4 is a flow chart showing a business process in a global table management subsystem according to the embodiment of the invention.

Fig. 5 is a flow chart showing a business process in an estimation support subsystem according to the embodiment of the invention.

Fig. 6 is a flow chart showing a business process in a trading cost calculation subsystem according to the embodiment of the invention.

Fig. 7 is a flow chart showing a business process in an EDI subsystem according to the embodiment of the invention.

Fig. 8 is a flow chart showing a business process in a workflow subsystem according to the embodiment of the invention.

Fig. 9 is an image diagram visualizing part of the business process in the workflow subsystem.

Fig. 10 is a flow chart showing a business process in a trading document preparation subsystem according to the embodiment of the invention.

Fig. 11 is an image diagram visualizing part of the business process in the trading document preparation subsystem.

Fig. 12 is a flow chart showing a business process in a user table management subsystem according to the embodiment of the invention.

### DETAILED DESCRIPTION OF THE EMBODIMENTS

Embodiments of the present invention will be described hereunder by way of electronic commerce system for trading operation with reference to the acfirming drawings.

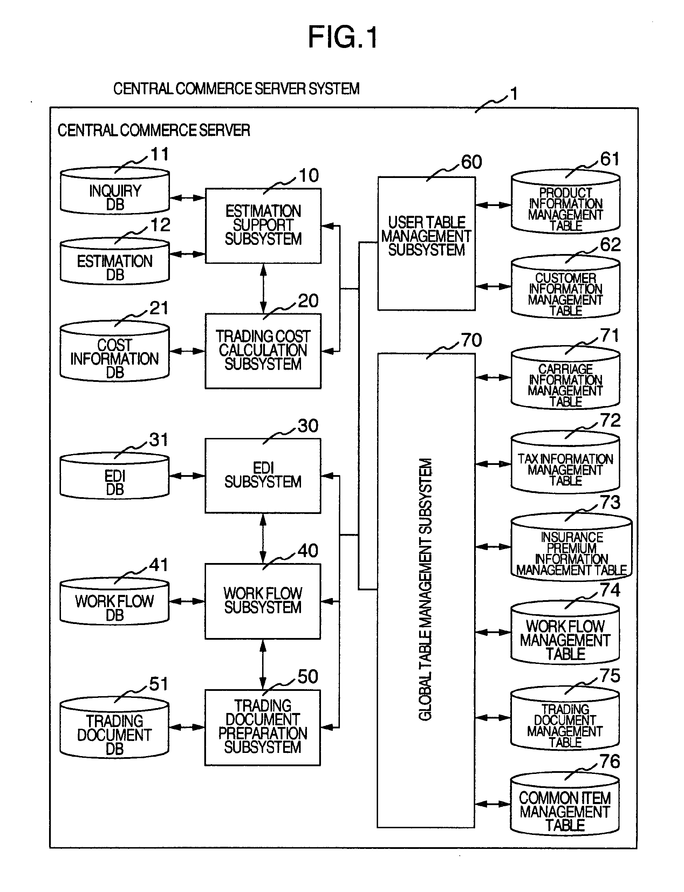

Referring now to Fig. 1, there is illustrated a fundamental construction diagram of a central commerce server, taking a leading part in the electronic commerce system for trading operation, according to an embodiment of the invention. A central commerce server, generally designated by reference numeral 1, comprises seven subsystems which include an estimation support subsystem 10, a trading cost calculation subsystem 20, an EDI (Electronic Data Interchange) subsystem 30, a workflow subsystem 40, a trading document preparation subsystem 50, a user table management subsystem 60 and a global table management subsystem 70.

The estimation support subsystem 10 is provided with two databases including an inquiry DB (Database) 11 for managing inquiry information registered by a user and an estimation DB 12 for managing estimation answer information (information on answer to inquiry) registered by a user other than the inquiry information registering user in association with the inquiry information.

The trading cost calculation subsystem 20 is provided with a cost information DB 21 adapted to automatically calculate, register and manage trading costs when an estimation answer to the inquiry information is originated from an overseas client.

The EDI subsystem 30 is provided with an EDI DB 31 for managing purchase order data registered by a user.

The workflow subsystem 40 is provided with a workflow DB 41 adapted to automatically prepare, register and manage a workflow concerning trading procedures when the purchase order data registered in the EDI subsystem 30 stems from an overseas transaction.

The trading document preparation subsystem 50 is provided with a trading document DB 51 adapted to prepare, register and manage trading related documents corresponding to individual business procedures on the workflow concerning the purchase order data prepared by the workflow subsystem when the purchase order data registered in the EDI subsystem stems from an overseas transaction.

The user table management subsystem 60 is provided with a product information management table 61 for managing product information in respect of individual clients and a customer information management table 62 for managing detailed information concerning users.

The global table management sub-system 70 is provided with a carriage information management table 71 for managing carriage information depending on country, weight, capacity and product, a tax information management table 72 for managing tax information depending on country and product, an insurance premium information management table 73 for managing insurance premium depending on country, product and sum, a workflow management table 74 for managing workflow parts concerning trading service, a trading document management table 75 for managing worksheet information of various kinds of trading documents in the trading service, and a common item management table 76 for managing related information of items used in common in the worksheets of the various trading documents.

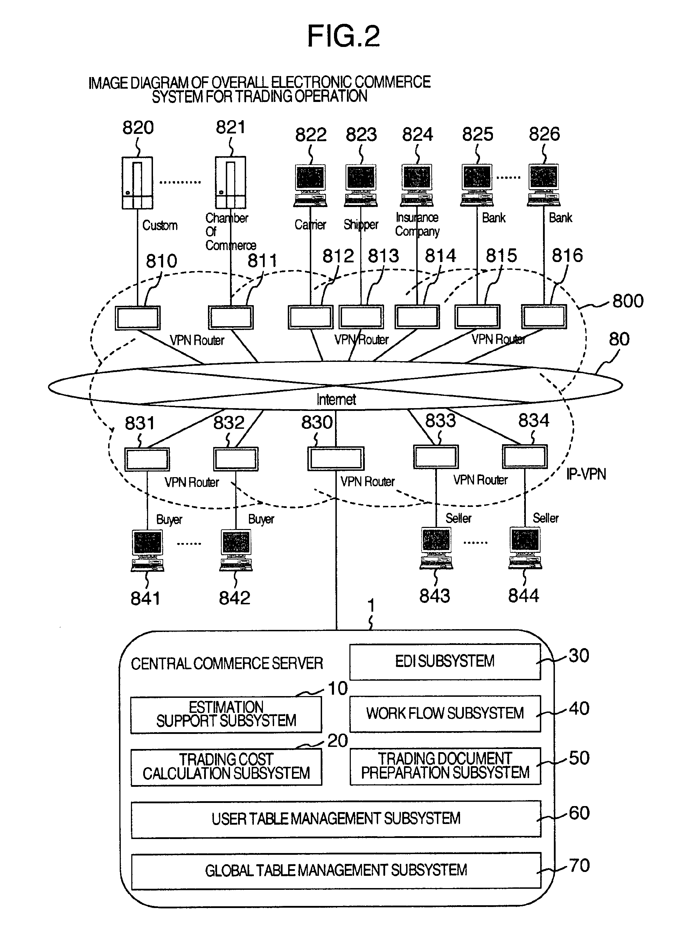

Referring to Fig. 2, there is illustrated an image diagram of the whole of the electronic commerce system for trading operation. A leading part of this system is the central commerce server 1 connected to an IP-VPN (Internet Protocol Based Virtual Private Network) 800 constructed on an internet 80. The central commerce server 1 is connected to the IP-VPN 800 through a VPN router 830 to permit communication of high security on the internet 80. If, in this case, communication security can be maintained by upper layer protocol such as SSL (Secure Socket Layer), then the virtual private network can be constructed without causing the central commerce server to route through the VPN router 830. Terminals of custom, chamber of commerce, carrier, shipper, insurance firm, bank, buyer and seller are all connected to the central commerce server by way of the IP-VPN 800.

The custom terminal 820 is connected to the IP-VPN 800 through a VPN router 810 so as to be accessible to subsystems for various users possessed by the central commerce server 1. If, in this case, communication security can be maintained by the upper layer protocol such as SSL as in the case of the central commerce server 1, then the virtual private network can be constructed without causing the custom terminal to route through the VPN router 810.

The terminal of chamber of commerce 821 is connected to the IP-VPN 800 through a VPN router 811 so as to be accessible to the subsystems for various users possessed by the central commerce server 1. If, in this case, communication security can be maintained by the upper layer protocol such as SLL as in the case of the central commerce server 1, then the virtual private network can be constructed without causing this terminal to route through the VPN router 811.

The carrier terminal 822 is connected to the IP-VPN 800 through a VPN router 812 so as to be accessible to the subsystems for various users. If, in this case, communication security can be maintained by the upper layer protocol such as SSL as in the case of the central commerce server 1, then the virtual private network can be constructed without causing this terminal to route through the VPN router 812.

The shipper terminal 823 is connected to the IP-VPN 800 through a VPN router 813 so as to be accessible to the subsystems for various users possessed by the central commerce server. If, in this case, communication security can be maintained by the upper layer protocol such as SSL as in the case of the central commerce server, then virtual private network can be constructed without causing this terminal to route through the VPN router 813.

The insurance firm terminal 824 is connected to the IP-VPN 800 through a VPN router 814 so as to be accessible to the subsystems for various users processed by the central commerce server. If communication security can be maintained by the upper layer protocol such as SSL as in the case of the central commerce server 1, then the virtual private network can be constructed without causing this terminal to route through the VPN router 814.

The bank terminals 825 and 826 are connected to the IP-VPN 800 through VPN routers 815 and 816, respectively, so as to be accessible to the subsystems for various users processed by the central commerce server. If communication security can be maintained by the upper layer protocol such as SSL as in the case of the central commerce server 1, then the virtual private network can be constructed without causing these terminals to route through the VPN routers 815 and 816, respectively.

The buyer terminals 841 and 842 are connected to the IP-VPN 800 through VPN routers 831 and 832, respectively, so as to be accessible to the subsystems for various users processed by the central commerce server. If communication security can be maintained by the upper layer protocol such as SSL as in the case of the central commerce server 1, then the virtual private network can be constructed without causing these terminals to route through the VPN routers 831 and 832, respectively.

Seller terminals 843 and 844 are connected to the IP-VPN 800 through VPN routers 833 and 834, respectively, so as to be accessible to the subsystems for various users possessed by the central commerce server 1. If communication security can be maintained by the upper layer protocol such as SSL as in the case of the central commerce server 1, then the virtual private network can be constructed without causing these terminals to route through the VPN routers 833 and 834, respectively.

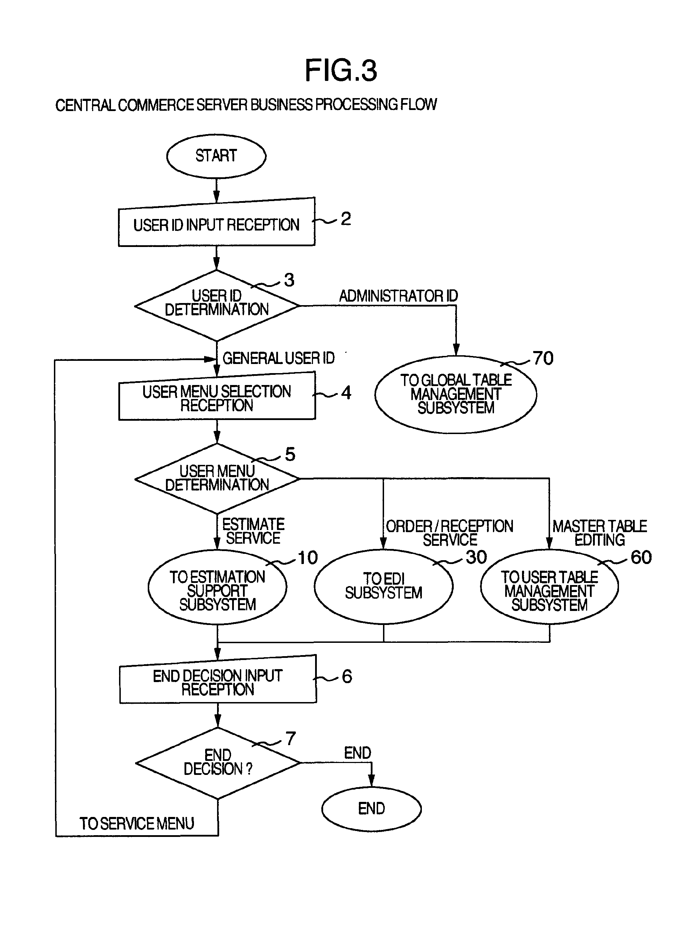

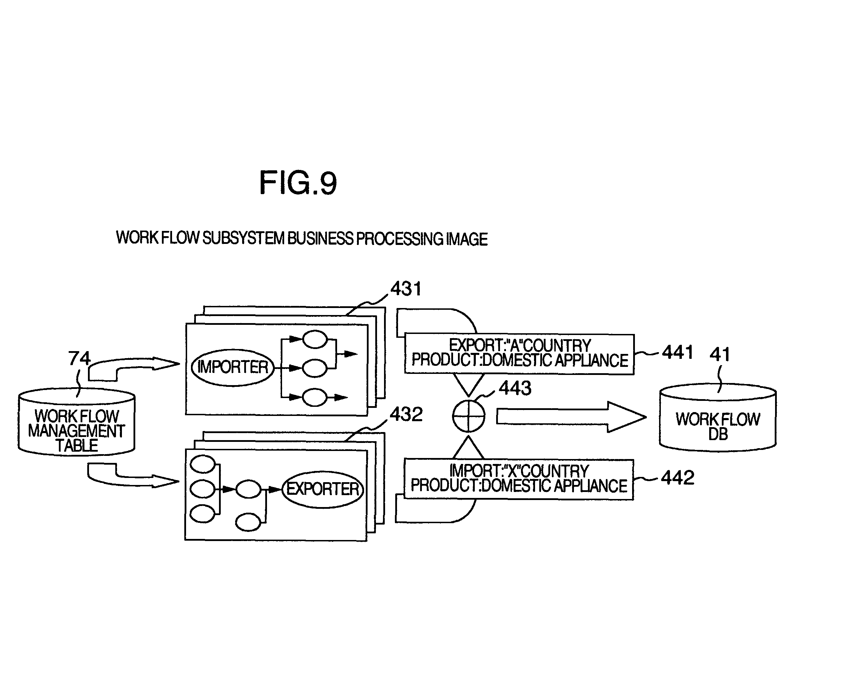

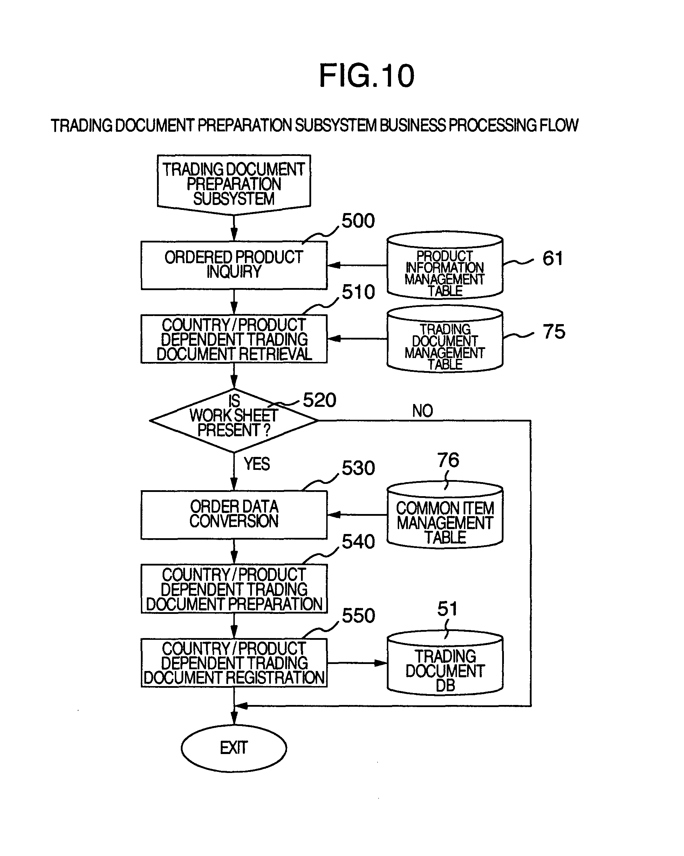

Referring to flow charts shown in Figs. 3 to 8, 10 and 12 and image diagrams shown in Figs. 9 and 10, a concrete business processing method in the central commerce server will be described.

A business processing flow in the central commerce server is shown in Fig. 3.

In step 2, the central commerce server 1 receives inputs of access request and user ID from the various user terminals connected through the IP-VPN 800.

In step 3, a user ID inputted in the step 2 is determined. As will be conceivable easily, for determination of the user ID, utilizing a known technique of electronic authentication, cryptograph or password to enhance security can do user authentication.

If the user ID is a general user ID indicative of a buyer or a seller, a user menu is displayed and an input of menu selection is received from the user through the IP-VPN 800 in step 4.

If the user ID is an ID for system manager such as administrator, the program proceeds to a business process of global table management system in step 70.

In step 5, the user menu inputted in the step 4 is determined.

When the user menu selected by the general user is estimation service, the program proceeds to a business process of estimation support system in step 10.

When the user menu selected by the general user is order acceptance/order service, the program proceeds to a business process of EDI table management subsystem in step 30.

When the user menu selected by the general user is master table editing, the program proceeds to a business process of user table management subsystem in step 60.

After the business process in each subsystem for users have been finished, an end decision input concerning the service for user is received from the general user terminal in step 6.

If, in step 7, data decided in the step 6 is determined as continuing the business process, the program returns to the user menu selection reception (step 4) but if the data indicates end, the process in the central commerce server ends.

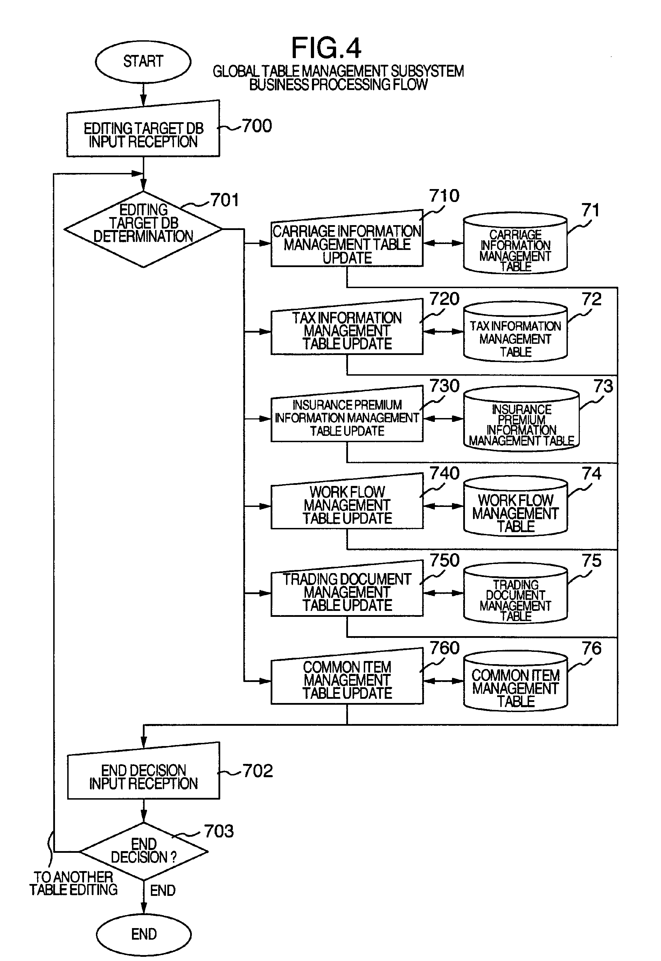

Referring to Fig. 4, there is illustrated a business processing flow in the global table management subsystem.

In step 700, the global table management system 70 receives an input of edition target DB from a user who is logged in with an ID for the system manager. In this case, access from the user may be accomplished by either remote access by way of the IP-VPN 800 or access from a console directly connected to the central commerce server 1.

Subsequently, in step 701, the inputted addition target DB is determined.

If the edition target DB is the carriage information management table, the carriage information table 71 which is put in order according to indexes such as country, product field, weight, capacity, distance, transport means and effective period is laid open to the user, operations for new registration, update, reference and deletion of the indexes and carriage data are received and the carriage information management table 71 is updated on the basis of the inputted data in step 710.

If the editing target DB is the tax information management table, the tax information management table 72 which is put in order according to indexes such as country, product field, sum and tax kind is laid open to the user, operations for new registration, update, reference and deletion of the indexes and tax data are received and the tax information table 72 is updated on the basis of the inputted data in step 720.

If the edition target DB is the insurance premium information management table, the insurance premium information management table 73 which is put in order according to indexes such as country, product field, sum, distance, transport means, Incoterms and effective period is laid open to the user, operations for new registration, update, reference and deletion of the indexes and insurance premium data are received and the insurance premium information management table 73 is updated on the basis of the inputted data in step 730.

If the edition target DB is the workflow management table, the workflow management table 74 for registering/ managing a workflow model which is put in order according to indexes such as country, product field and trading pattern, and workflow parts, in which target dealers and necessary preparation documents are put in order according to trading pattern, is laid open to the user, operations for new registration, update, reference and deletion of the workflow model and workflow parts are received and the workflow management table 74 is updated on the basis of the inputted data in step 740.

If the edition target DB is the trading document management table, the trading document management table 75 for managing various kinds of trading document worksheets which are put in order according to indexes such as country, product field and trading pattern is laid open to the user, operations for new registration, update, reference and deletion of the trading document worksheets are received, and the trading document management table 75 is updated on the basis of the inputted data in step 750.

If the edition target DB is the common item management table, the common item management table 76 for managing common item related information corresponding to individual items in the various trading documents worksheets managed by the trading document management table 75 is laid open to the user, operations for new registration, update, reference and deletion of the common item related information are received, and the common item management table 76 is updated on the basis of the inputted data in step 760.

It will be realized that the trading document management table 75 can be related to the common item management table 76 with ease by using known techniques, for example, a definition method of DTD (Data Type Definition) in XML (Extensible Markup Language).

After the edition of the DB has ended, an input of end decision is received from the user terminal in step 702.

In step 703, the input from the user is determined and if the process is determined to continue, the program returns to the step 701 of edition target DB determination in which another table editing is carried out successively but if the process end is determined, the process in the global table management subsystem ends.

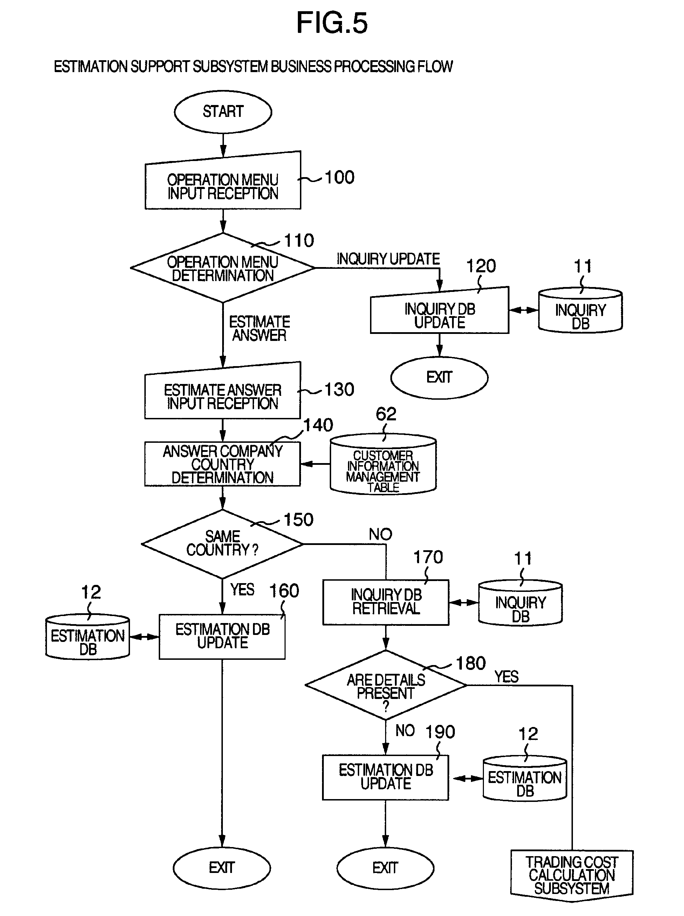

Referring to Fig. 5, there is illustrated a business processing flow in the estimation support subsystem.

In step 100, the estimation support subsystem 10 receives an input of operation menu selection from a general user terminal through the IP-VPN 800.

The operation menu inputted from the user terminal is determined in step 110. In case the operation menu is inquiry update, new registration, update and reference of inquiry information are received from the user terminal, and the inquiry DB 11 is updated in step 120 on the basis of the input data. After completion of the update process, the program proceeds to the step 6 in which the central commerce server receives an input of end decision.

If the operation menu is an estimation answer (an answer to estimation), an input of the estimation answer is received from the user terminal in step 130.

The customer information management table 62 is retrieved on the basis of the logged-in user ID, and from information specific to an estimation answer firm registered in the customer management table, information of a country to which the firm belongs is extracted in step 140.

Then, in step 150, matching between a country to which a firm receiving the estimation answer and the information of a country to which the firm sending the estimation answer firm belongs is examined. The matching is executed as below.

Firstly, when estimation is requested from a computer of a first firm, a country to which the first firm belongs is identified. For this identification, user identifiers corresponding to computers of a plurality of firms and the correspondence relation of countries to which the firms belong with the user identifiers are held and as a user identifier is inputted from a computer of the first firm, a country to which the first firm belongs may be identified on the basis of the inputted user identifier and held information.

When an answer of the estimation is made from a computer of a second firm, a country to which the second firm belongs is identified. For this identification, user identifiers corresponding to computers of a plurality of firms and the correspondence relation of countries to which the firms belong with the user identifies are held and as a user identifier is inputted from a computer of the second firm, a country to which the second firm belongs may be identified on the basis of the inputted user identifier and held information.

When the firm receiving the estimation answer coincides with the information of the country to which the estimation answer sending firm belongs, the estimation DB 12 is updated in step 160 on the basis of the estimation data inputted from the user terminal in the step 130 of estimation answer input reception.
After completion of the update processing, the program proceeds to the step 6 of end decision input reception by the central commerce server.

When the firm receiving the estimation answer is not coincident with the information of the country to which the estimation answer sending firm belongs, the inquiry DB 11 is retrieved in step 170 by using an inquiry code as a key to extract details of the inquiry information.

If details of the inquiry information are determined to exist in step 180, the program proceeds to a business processing in the trading cost calculation subsystem.

In case the details of the inquiry information do not exist on the inquiry DB 11, the estimation DB 12 is updated in step 190 on the basis of the estimation data inputted from the user terminal in the step 130 of estimation answer input reception. After the update process has been finished, the program proceeds to the step 6 of end decision input reception by the central commerce server.

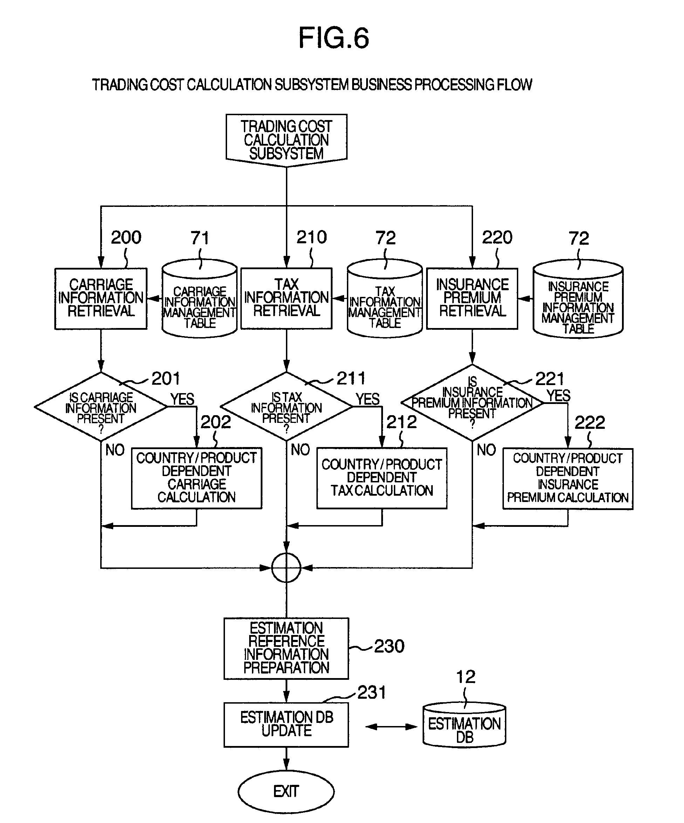

Referring to Fig. 6, there is illustrated a business process flow in the trading cost calculation subsystem.

In step 200, the trading cost calculation subsystem 20 retrieves the carriage information management table 71 on the basis of the inquiry detailed information acquired through the inquiry DB retrieval (step 170) by using, as a key, the country information, product field information, weight information, capacity information, distance information or transport means information.

If, in step 201, carriage information corresponding to the carriage information management table 71 does not exist, the program proceeds to the next process.

In the presence of the carriage information corresponding to the carriage information management table 71, the carriage depending on country, product field, weight, capacity, distance and transport means is calculated in step 202.

In step 210, the trading cost calculation subsystem 20 retrieves the tax information management table 72 on the basis of the inquiry detailed information acquired in the inquiry DB retrieval 170 and the estimation answer information inputted by the user in the estimation answer input reception 130 by using, as a key, country information, product field information or estimation answer fee information.

If corresponding tax information does not exist in the tax information management table 72 in step 211, the program proceeds to the next process.

In the presence of the corresponding tax information in the tax information management table 72, tax information depending on country, product field, sum or tax field is calculated in step 212.

In step 220, the trading cost calculation subsystem 20 retrieves the insurance premium information management table 73 on the basis of the inquiry detailed information acquired in the inquiry DB retrieval 170 and the estimation answer information inputted by the user in the estimation answer input reception 130 by using, as a key, country information, product field information, estimation answer fee information, distance information, transport means information or Intercoms information.

If corresponding insurance premium information does not exist in the insurance premium information management table 73 in step 221, the program proceeds to the next process.

In the presence of the corresponding insurance premium information in the insurance premium management table 73, tax information depending on country, product field, sum, distance, transport mean and Intercoms is calculated in step 222.

Carriage information calculated in the country/product dependent carriage calculation 202, tax information calculated in the country/product dependent tax calculation 212 and insurance premium information calculated in the country/product dependent insurance premium calculation 222 are merged to prepare estimation reference information in step 230.

In step 231, the estimation DB 12 is updated by attaching the estimation reference information prepared in the estimation reference information preparation 230 to the estimation answer information inputted by the user in the estimation answer input reception 130. After completion of the update process, the program proceeds to the end decision input reception 6 by the central commerce server.

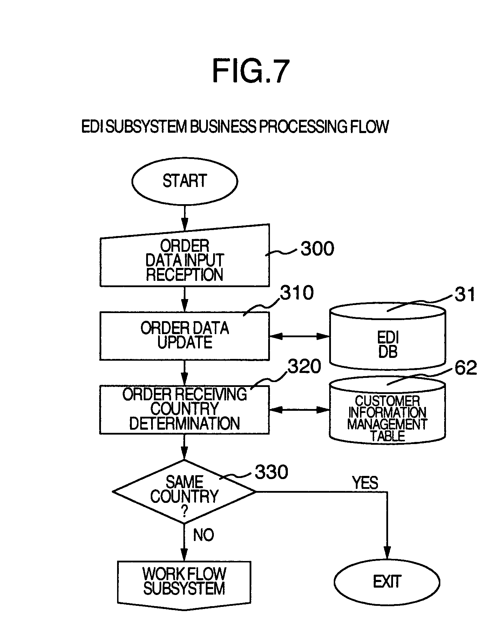

Referring to Fig. 7, there is illustrated a business processing flow in the EDI subsystem.

In step 300, the EDI subsystem 30 receives an input of purchase order data from a user terminal such as buyer terminal 841 or 842 through the IP-VPN 800.

In step 310, the EDI DB 31 is updated on the basis of the purchase order data inputted in the order data input reception 300.

In step 320, the customer information management table 62 is retrieved by using the logged-in user ID as a key to extract country information to which an order sending firm belongs and the customer information management table 62 is also retrieved by using, as a key, an order receiving firm code on the purchase order data to extract country information to which the order receiving firm belongs.

Matching between the country information of a country to which the order sending firm belongs, retrieved in the order receiving firm determination 320, and the information of a country to which the order receiving firm belongs, also retrieved in the order receiving firm determination 320, is examined in step 330. If the purchase order process is carried out between identical counties, the program proceeds to the end decision input reception 6 by the central commerce server. If the order transaction is carried out between different countries, the program proceeds to a business process in the workflow subsystem 40.

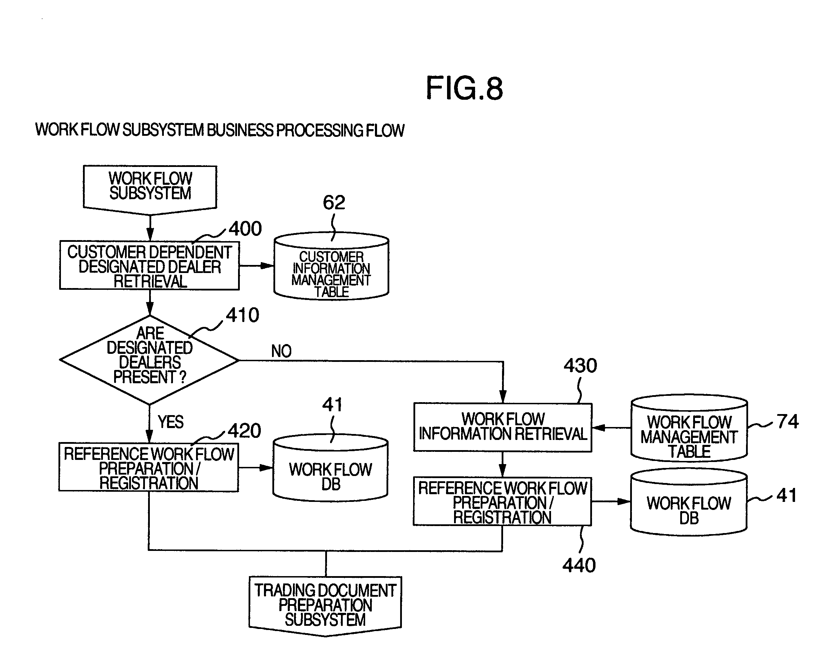

Referring to Fig. 8, there is illustrated a business processing flow in the workflow subsystem.

In step 400, the workflow subsystem 40 retrieves the customer information management table 62 by using, as a key, the order sending firm code and the order receiving firm code to extract customer information of the order sending firm and the order receiving firm.

It is determined in step 410 whether a designated dealer during import service is registered in the customer information of the order sending firm and a designated dealer during export service is registered in the customer information of the order receiving firm.

If both the order sending firm and the order receiving firm have registered the designated dealers, a reference workflow is prepared on the basis of that information and is registered in the workflow DB 41 by using the order code as a key in step 420. After completion of the registration, the program proceeds to a business process in the trading document preparation subsystem.

If the designated dealer has not been registered in at least one of the order sending firm and the order receiving firm, the workflow management table 74 is retrieved by using, as a key, importing country information and product field information and exporting country information and product field information in step 430 to extract recommended workflow information which has already been registered by the system manager.

Import firm recommended workflow information and export firm recommended information, extracted in the workflow information retrieval 430, are merged to prepare reference workflow information which in turn is registered in the workflow DB 41 in step 440. After completion of the registration, the program proceeds to the business process in the trading document preparation subsystem 50.

Referring to Fig. 9, there is illustrated a business processing image in the workflow subsystem.

Managed by the workflow management table 74 are recommended workflow data in export business as shown at 441 which are classified according to country and product field and recommended workflow data in import business as shown at 432 which are classified according to country and product field.

Export workflow data is definitely specified as shown at 441 from the workflow management table 74 by using the country code or the product field code as a key by way of the recommended workflow data in export business depending on country shown at 431. Similarly, import workflow data is definitely specified as shown at 442 from the workflow management table 74 by using the country code or the product field code as a key by way of the recommended workflow data in import business depending on country shown at 432. The workflow data specified in sections 441 and 442 are merged to prepare reference workflow data which in turn is registered in the workflow DB by using the order code as a key. On the basis of the workflow information registered in the workflow DB 41, the workflow subsystem makes a request to related dealers and related government offices for operation, thereby permitting management of workflow. The order sending firm and the order receiving firm can make reference to the workflow information through the IP-VPN 800 and the recommended dealers on the workflow can be changed by the order sending firm and the order receiving firm. It is easily conceivable that the business process as above can be implemented by using known technique for workflow management.

Referring to Fig. 10, there is illustrated a business processing flow in the trading document preparation subsystem.

In step 500, the trading document preparation subsystem 50 retrieves the product information management table 61, on the basis of the purchase order data inputted from the buyer terminal in the order data input reception 300, by using the ordered product information on the purchase order data as a key to extract the product information.

Product field information of the ordered product is extracted from the product information extracted in the ordered product inquiry 500. Besides, necessary trading document information is extracted from service information defined on the workflow prepared in the workflow subsystem 40. In step 510, the trading document management table 75 is retrieved by using, as a key, the country information of the order sending firm and the order receiving firm, the extracted product field information and the extracted necessary trading document information to extract a worksheet of the trading document.

If the worksheet of the trading document is not determined to be present in step 520, the business process in the trading document preparation subsystem 50 ends and the program proceeds to the process of end decision input reception 6 by the central commerce server 1.

In the presence of the worksheet of the trading document, the program proceeds to step 530 in which individual item data in the purchase order data are converted into item columns defined on the worksheet by making reference to the common item management table 76.

The process of order data conversion 530 is carried out for all trading document worksheets in question to prepare, in step 540, trading documents different for countries/products defined on the workflow for the purchase order data.

The trading document data prepared differently for countries/products in the step 540 are registered in the trading document DB 51 in step 550 by using, as a key, the order code and a trading document name. After completion of the registration, the business process in the trading document preparation subsystem 50 ends and the program proceeds to the end decision input reception 6 by central commerce server 1.

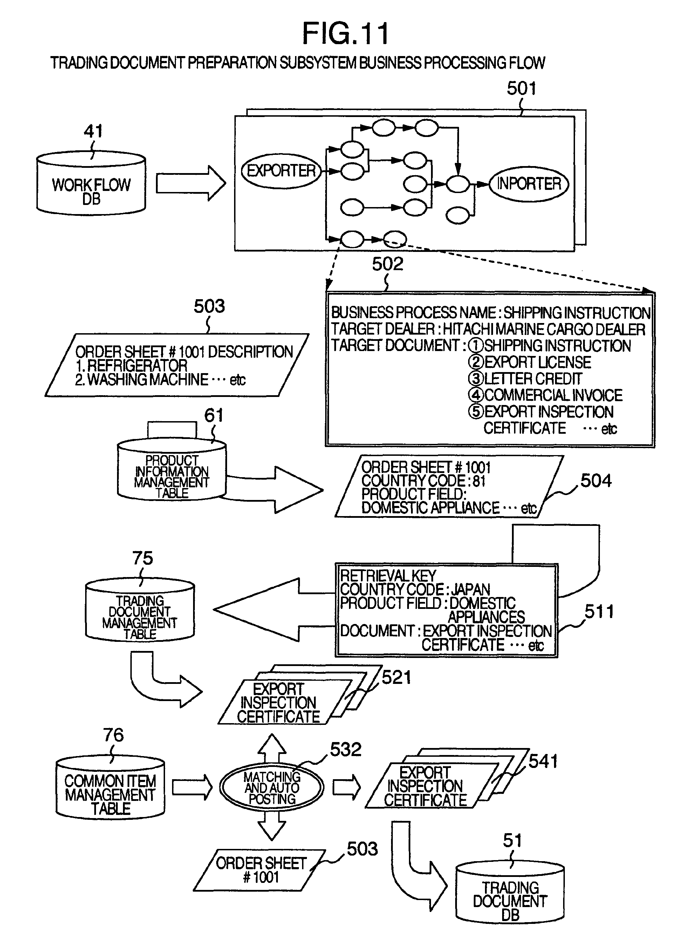

Referring to Fig. 11, there is illustrated a business processing image in the trading document preparation subsystem. Individual workflow data 501 for individual order processes are stored in the workflow DB 41 by using the order codes as a key. In each business process defined on each workflow data 501, business process name, target dealer, target document name and service status are managed as business process information, as shown at 502.

The purchase order data is indicated at 503. The product information management table 61 is retrieved by using, as a key, a product code registered in detailed data on the purchase order data to extract product field information of the order target product as shown at 504.

In respect of all trading documents defined on the workflow concerning the purchase order data, the trading document management table 75 is retrieved by using, as a key, the country code, product field and document name to extract worksheet information 521 of the corresponding document as shown at 511.

In respect of the worksheet information 521, the common item management table 76 is retrieved by using, as a key, individual item tug information defined on the same worksheet and matching is examined, as shown at 532, between the retrieved data and information related to data item defined on the purchase order data 503, so that convertible data is converted into concrete data on the worksheet information.

Then, as shown at 541, the purchase order data 503 extracted in 511 is converted onto the worksheet to automatically prepare necessary trading document data which is in turn registered in the trading document DB 51 by using, as a key, the order code and the trading document name, as shown at 541.

If, in this case, necessary items of the necessary trading document are not filled up with the purchase order data or the data defined on the common item management table, it is automatically detected that the document is incomplete, with the result that a dealer required to prepare an original document defined on the workflow concerning the order data can be requested to input necessary items by using the function of, for example, agent function through the use of the known function of workflow or agent software.

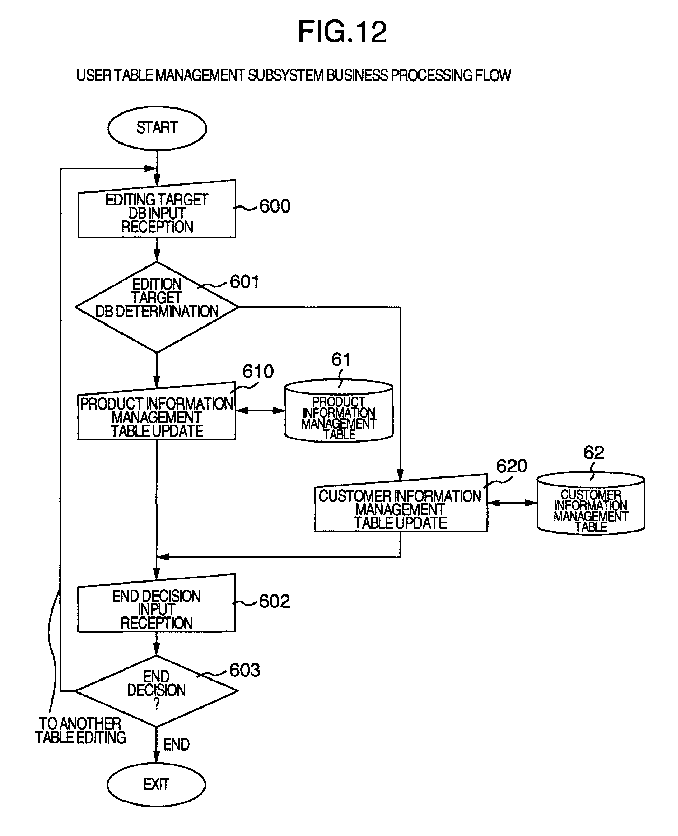

Referring to Fig. 12, there is illustrated a business processing flow in the user table management subsystem.

In step 600, the user table management subsystem 60 receives a selection input for the edition target DB from a general user terminal through the IP-VPN 800.

The edition target DB inputted from the general user terminal is determined in step 601.

If the edition target DB is the product information management table 61, definition inputs of detailed information such as product code, product name, product field, weight, capacity, size and specifications are received in respect of product information of each user firm in question and in step 610, the product information management table 61 is updated on the basis of such a process selected by the user as new registration, update, inquiry or deletion.

If the edition target DB is the customer information management table 62, inputs of information such as firm name, location, director organization, management information and business field are received for each user firm in question and in step 620, the customer information management table 62 is updated on the basis of such a process selected by the user as new registration, update, inquiry or deletion. Then, in step 602, an input of end decision is received from the general user terminal.

If, in step 603, the end decision is determined as continuing the process, the program returns to the edition target DB input reception 600 but in the case of the process end, the business process in the user table management subsystem 60 ends and the program proceed to the end decision input reception 6 by central commerce server 1.

According to the present invention, a trading service can be carried out for a user who performs an electronic transaction on the closed virtual commerce space in a way similar to a domestic transaction and in the case of a trading transaction, by virtue of the trading operation supporting function presented by the trading cost calculation subsystem, the workflow subsystem and the trading document preparation subsystem, the user can confirm the execution of transaction and additional expenditure without being conscious of the trading procedures.

## Claims

1. A server connected to computers of a plurality of firms through a network and having a function to support trading operation, comprising:
means for responding to a request for estimation from a computer of a first firm of said plurality of firms to identify a country to which said first firm belongs;
means for responding to an answer to the estimation from a computer of a second firm of said plurality of firms to identify a country to which said second firm belongs;
means for determining whether the country to which said first firm belongs coincides with the country to which said second firm belongs; and
means for responding to a determination of non-coincidence from said determining means to add to an estimate made by said second firm a cost concerning a trade.

2. A server having a trading operation supporting function according to claim 1, wherein said means for identifying the country to which said first firm belongs includes:
user identifiers corresponding to the computers of said plurality of firms;
hold means for holding a correspondence relation between said user identifiers and countries to which the firms belong; and
means for responding to inputting of a user identifier from the computer of said first firm to identify the country to which said first firm belongs on the basis of said inputted user identifier and said hold means.

3. A server having a trading operation supporting function according to claim 1, wherein said means for identifying the country to which said second firm belongs includes:
user identifiers corresponding to the computers of said plurality of firms;
hold means for holding the correspondence relation between said user identifiers and countries to which the firms belong; and
means responding to inputting of a user identifier from the computer of said second firm to identify the country to which said second firm belongs on the basis of said inputted user identifier and said hold means.

4. A server having a trading operation supporting function according to claim 1 further comprising means for responding to non-coincidence between the countries to which said first and second countries belong, respectively, to generate a workflow of trading operation on the basis of said estimation request and estimation answer.

5. A server having a trading operation supporting function according to claim 4 further comprising means for generating a trading document concerning said workflow of trading operation.

6. A server having a trading operation supporting function according to claim 1 wherein said cost concerning trading includes a carriage concerning said trading, a tax concerning said trading and an insurance premium concerning said trading.

7. An intermediate server for mediating transmission/reception of information on a network, comprising:
first receiving means for receiving first information transmitted from a first computer;
first identification means for identifying a region in which a user transmitting the first information resides;
second receiving means for receiving second information transmitted from a second computer in response to said first information; and
second identification means for identifying a region in which a transmitter of said second information resides,
wherein said identification means includes storage means for storing identifiers assigned to individual users and residence place information for specifying regions in which said individual users reside by making the correspondence of the identifiers with the residence place information, and residence place specifying means for specifying a region in which each user resides on the basis of an identifier inputted by each user and the residence place information stored in said storage means.

8. An intermediate server used for electronic commerce according to claim 7, comprising:
means for inquiry reception means for receiving inquiry information;
estimate reception means for receiving estimation information transmitted in response to said inquiry information;
first identification means for identifying a region in which a first user transmitting said inquiry information resides;
second identification means for identifying a region in which a second user transmitting said estimation information resides;
collation means for collating a first region identified by said first identification means with a second region identified by said second identification means; and
transaction cost presenting means for responding to a result of the collation by said collation means to add a transaction cost to said estimation information and present the resulting estimation information.

9. An intermediate server according to claim 8, wherein said transaction cost is a carriage.

10. An intermediate server according to claim 8 further comprising order reception means for responding to said estimation information to receive order information transmitted by the user who has transmitted said inquiry information, and storage means for storing said order information.

11. An intermediate server according to claim 10 further comprising first storage means for storing a predetermined workflow relating to an order sending user by making the correspondence of the workflow with the order sending user; second storage means for storing a predetermined workflow relating to an order receiving user by making the correspondence of the workflow with the order receiving user; third storage means for storing a workflow recommended by a system manager; first retrieval means for retrieving the workflow stored in said first storage means for the sake of convenience of the order sending user during order; second retrieval means for retrieving the workflow stored in said second storage means for the sake of convenience of the order receiving user during order; third retrieval means for retrieving the workflow stored in said third storing means in accordance with results of retrievals by said first and second retrieval means; and workflow selection means for selecting a predetermined workflow through each of said retrievals.

12. An intermediate server according to claim 11, wherein said third storage means is storage means for managing the recommended workflow in respect of individual residence places of the users performing transactions.

13. An intermediate server according to claim 11 further comprising trading document worksheet storage means for storing trading document worksheet information, document worksheet specifying means for specifying necessary trading document worksheet information on the basis of workflow data selected by said workflow selection means, and trading document preparation means for preparing a trading document on the basis of a trading document worksheet specified by said worksheet specifying means and order information referred to during order.

14. An intermediate server according to claim 13, wherein said order information includes information of a region in which the order sending user resides, information of a region in which the order receiving user resides and product field information concerning an ordered product.

15. A commerce operation supporting method concerning transactions carried out on a network, comprising:
an inquiry information reception step of receiving inquiry information;
a first identification step of identifying a region in which a first user transmitting said inquiry information resides;
an estimate information reception step of receiving estimation information transmitted in response to said inquiry information;
a second identification step of identifying a region in which a second user transmitting said estimate information resides;
a collation step of collating a first region identified in said first identification step with a second region identified in said second identification step; and
a transaction cost calculation step of adding a transaction cost to said estimation information in accordance with a result of the collation by said collation step and presenting resulting estimation information.

16. A transaction operation supporting method according to claim 15 further comprising;
a step of receiving order information transmitted in response to said estimation information from the user transmitting inquiry information;
a step of storing said order information;
a first retrieval step of retrieving a predetermined workflow for convenience of the sake of the order sending user;
a second retrieval step of retrieving a predetermined workflow for convenience of the sake of the order receiving user;
a third retrieval step of retrieving a recommended workflow in accordance with retrieval results in said first and second retrieval results; and
a step of selecting a predetermined workflow in accordance with results of retrievals in said individual retrieval steps.

17. A commerce operation supporting method according to claim 16 further comprising a step of specifying a necessary trading document worksheet on the basis of workflow data selected in said workflow selecting step, and a step of preparing a trading document on the basis of the trading document worksheet information specified in said worksheet specifying step and the inquiry information referred to during order.
